# EUROPÄISCHE PATENTANMELDUNG

(11) **EP 4 822 623 A1**
(43) Veröffentlichungstag der Anmeldung: **14.10.2026**
(21) Anmeldenummer: 26180549.3
(22) Anmeldetag: 03.05.2018
(51) Int. Cl.: G06Q 10/0836, G06Q 50/60, G07C 9/00

(54) **VERFAHREN, SYSTEM SOWIE COMPUTERPROGRAMM ZUR ZUSTELLUNG EINER LIEFERUNG AN EINEM BESTIMMUNGSORT**

(62) Dokumentnummer(n) der früheren Anmeldung(en) nach Art. 76 EPÜ: 18170677.1 / 3 564 878
(71) Anmelder: Novoferm GmbH, 46419 Isselburg (DE)
(72) Erfinder: Machill, Mathias, 50996 Köln (DE); Bühner, Pascal, 59555 Lippstadt (DE)
(74) Vertreter: Andrejewski - Honke Patent- und Rechtsanwälte Partnerschaft mbB

(57) **Zusammenfassung**

Verfahren zum Zustellen einer Lieferung (1) an einem Bestimmungsort, wobei der Lieferung (1) eine eindeutige Sendungskennung zugeordnet wird, die an der Lieferung (1) angebracht ist und die in einem ersten Computersystem (3) zur Verwaltung von einer Mehrzahl von Lieferungen gespeichert wird, wobei an dem Bestimmungsort eine mittels eine automatischen Garagentores (9, 10) verschließbare Garage (6) vorhanden ist, welches durch ein zweites Computersystem (8) gesteuert werden kann, wobei die Sendungskennung an der Lieferung (1) nach Erreichen des Bestimmungsortes erfasst und an das erste Computersystem (3) übermittelt wird, wobei das erste Computersystem (3) anschließend eine die Sendungskennung umfassende Nachricht an das zweite Computersystem (8) übermittelt, woraufhin das zweite Computersystem (8) die Öffnung des Garagentores (10) auslöst, wonach die Lieferung (1) durch das Garagentor (10) transportiert und innerhalb der Garage (6) abgelegt wird, wonach das Garagentor (10) wieder geschlossen wird.

## Beschreibung

Die Erfindung betrifft ein Verfahren, ein System sowie ein Computerprogramm zur Zustellung einer Lieferung an einem Bestimmungsort.

In der Vergangenheit hat die Anzahl von Liefervorgängen erheblich zugenommen. Aufgrund des Online-Versandhandels erhalten viele Benutzer mehrfach pro Woche Pakete, in denen die bestellten Waren verpackt sind. Gleichzeitig gestaltet sich die zuverlässige Annahme der Lieferungen am Bestimmungsort schwierig. So kann aufgrund von anderweitigen Verpflichtungen nicht immer eine durchgängige Präsenz des Empfängers am Bestimmungsort gewährleistet sein. Auch die zuverlässige Vorabplanung eines Lieferzeitpunktes gestaltet sich für einen Logistikdienstleister in Folge von schwankendem Arbeits- und Verkehrsaufkommen als schwierig.

Infolgedessen geschieht es immer häufiger, dass der Empfänger am Bestimmungsort durch einen Zusteller nicht angetroffen wird. In diesem Fall muss die Lieferung an einem alternativen Ort abgelegt oder die Zustellung zu einem späteren Zeitpunkt erneut versucht werden. Beide Alternativen sind sowohl fürden Logistikdienstleiterals auch für den Empfänger unbefriedigend, da bei einereinfachen Ablage eine rechtssichere Übergabe an den Empfänger nicht möglich ist und andererseits durch einen erneuten Zustellversuch auf beiden Seiten wieder Ressourcen gebunden werden, ohne dass dann eine erfolgreiche Zustellung garantiert wäre.

Vor diesem Hintergrund gibt es Ansätze, bei denen ein Versandhändler gleichzeitig auch elektronische Wohnungstürschlösser anbietet, welche durch den Zusteller geöffnet werden können. Diese Lösung ist jedoch von Nachteil, da diese Funktion nur bei dem Versandhändler genutzt werden kann, welcher auch das Türschloss geliefert hat. Weiterhin bestehen neben erheblichen datenschutzrechtlichen Bedenken auch große Vorbehalte demgegenüber, den Zugang zur eigenen Wohnung nicht mehr vollständig selbst zu kontrollieren, sondern zumindest in Teilen an einen Geschäftspartner zu übertragen. Es besteht bei derartigen Lieferungen immer auch das Risiko, dass Unberechtigte Zugang zur Wohnung erhalten.

Demgegenüber liegt der Erfindung die Aufgabe zugrunde, eine flexible und vielseitige Möglichkeit zur Annahme einer Lieferung in Abwesenheitsfall bereitzustellen und dabei gleichzeitig die eigenen Risiken sowie den Zugang zum Privatbereich zu minimieren. Gegenstand der Erfindung und Lösung dieser Aufgabe ist ein Verfahren nach Anspruch 1 sowie ein System nach Anspruch 16 und ein Computerprogramm nach Anspruch 17. Bevorzugte Ausgestaltung sind in den Unteransprüchen angegeben.

Zustellen bezeichnet den Vorgang, bei dem eine Lieferung, insbesondere eine oder mehrere Pakete, Paletten, Säcke und/oder andere transportfähige Verpackungen mit darin befindlichen Gütern von einem ersten Ort (Absenderadresse) an einem Bestimmungsort (Zieladresse) von einem Logistikdienstleiter transportiert werden. An dem Bestimmungort soll die Lieferung dabei nach Möglichkeit durch den Empfänger angenommen und sicher in Verwahrung genommen werden. Als Zustellung wird dabei insbesondere der Transport der Lieferung an den Bestimmungsort und die dortige Übergabe in die Verfügungsgewalt des Empfängers bezeichnet.

Zur Organisation des gesamten Lieferprozesses wird der Lieferung eine eindeutige Sendungskennung zugeordnet. Diese kann insbesondere aus einer Reihe von Ziffern, Buchstaben und/oder anderen druckbaren Zeichen bestehen.

Die Sendungskennung ist einerseits an der Sendung angebracht. Das bedeutet, dass die Senungskennung in einer maschinell oder durch den Zusteller auslesbaren Weise mit der Lieferung physisch verknüpft ist. Die Sendungskennung kann insbesondere als gedruckte oder geschriebene Zeichenfolge, als Strichcode, als 2D-Code (beispielsweise QR-Code, DataMatrix, MaxiCode, Aztec-Code, u. dgl.), als RFID-Tag oder Kombination hieraus an der Oberfläche der Lieferung befestigt sein. Repräsentationen der Sendungskennung, die ohne Sichtkontakt ausgelesen werden können (beispielsweise RFID-Tags) können auch im Innern der Lieferung angeordnet sein.

Andererseits ist die Sendungskennung in einem ersten Computersystem zur Verwaltung einer Mehrzahl von Lieferungen gespeichert. Das erste Computersystem ist insbesondere dem Logistikanbieter zugeordnet, welcher die Lieferung durchführt.

Zur Durchführung des erfindungsgemäßen Verfahrens ist an dem Bestimmungsorteine mittels eines automatischen Garagentores verschließbare Garage vorhanden. Diese kann durch ein zweites - von dem ersten Computersystem verschiedenes - Computersystem gesteuert werden. Das erste Computersystem und das zweite Computersystem sind insbesondere an unterschiedlichen Standorten angeordnet und beide mit dem Internet verbunden.

Im Rahmen des erfindungsgemäßen Verfahrens ist vorgesehen, dass die Sendungskennung an der Lieferung nach Erreichen des Bestimmungsortes erfasst und an das erste Computersystem übermittelt wird. Das erste Computersystem übermittelt anschließend eine die Sendungskennung umfassende Nachricht an das zweite Computersystem. Daraufhin löst das zweite Computersystem die Öffnung des Garagentores aus. Danach wird die Lieferung durch das Garagentor transportiert und innerhalb der Garage abgelegt. Anschließend wird das Garagentor wieder geschlossen.

Im Rahmen des erfindungsgemäßen Verfahrens wird der Eingriff in den Privatbereich des Empfängers signifikant reduziert, da kein Zugang zum eigenen Wohnbereich mehr gewährt werden muss, sondern lediglich eine Garage geöffnet wird. Entsprechend ist auch das Schadensrisiko im Missbrauchsfall deutlich geringer als wenn die komplette Wohnung geöffnet werden müsste. Da die Garage nach Ablage der Lieferung wieder geschlossen wird, ist diese im Vergleich zu einer unkontrollierten Ablage auf dem Empfängergrundstück deutlich besser gesichert und dabei nicht nur vor Diebstahl, sondern auch vor Witterungseinflüssen geschützt. Die Zusammenarbeit zwischen dem ersten Computersystem - welches dem Logistikanbieter zugeordnet ist - und dem zweiten Computersystem - welches von dem Empfänger oder einer durch ihn beauftragten Stelle betrieben wird - behält der Empfänger die vollständige Kontrolle über den Zugang zu seiner Garage. Er kann dabei jederzeit den Zugang auch wieder sperren.

Die Kommunikation zwischen dem ersten Computersystem und dem zweiten Computersystem lässt sich insbesondere so weit standardisieren, dass auch eine Zusammenarbeit zwischen unterschiedlichen Systemen möglich ist. Die Schnittstelle zwischen dem ersten Computersystem und dem zweiten Computersystem, über die die Nachricht übertragen wird, lässt sich so ausgestalten, dass der Empfänger unabhängig vom Logistikanbieter ist. Das zweite Computersystem ist dabei so eingerichtet, dass es von mehreren ersten Computersystemen unterschiedlicher Logistikanbieter Nachrichten empfangen und verarbeiten kann. Die Übermittlung der Nachricht von dem ersten Computersystem an das zweite Computersystem erfolgt insbesondere verschlüsselt und/oder digital signiert. Hierdurch wird eine Manipulation von außen - etwa zur unberechtigten Erlangen eines Zuganges zu der Garage - verhindert. Für Verschlüsselung und Signatur werden insbesondere kryptografische Verfahren eingesetzt.

Ebenso ist es im Rahmen der Erfindung möglich, dass der das erste Computersystem betreibende Logistikanbieter mit fremden Lieferdiensten - z.B. lokalen Lebensmittellieferanten, insbesondere Getränkelieferanten - zusammenarbeitet. Dabei wird einer Lieferung des fremden Lieferdienstes eine Sendungskennung zugeordnet, sodass die Garage zum Empfang der Lieferung genutzt werden kann.

Zur Durchführung des Verfahrens ist in dem ersten Computersystem insbesondere die Information hinterlegt, dass und/oder wie eine Öffnung des automatischen Garagentores über das zweite Computersystem für einen bestimmten Empfänger und/oder einen bestimmten Bestimmungsort zulässig ist.

In einer bevorzugten Ausgestaltung bestätigt das zweite Computersystem an das erste Computersystem die Übergabe des Öffnungsbefehls an das automatische Garagentor. Für diese Rückmeldung wird insbesondere derselbe Nachrichtenkanal, vorzugsweise verschlüsselt und/oder digital signiert, wie für die Nachricht verwendet. Infolge der Rückmeldung kann in dem ersten Computersystem vermerkt werden, dass die Zustellung wahrscheinlich gelingen wird und ein weiterer Zustellversuch oder eine alternative Ablage unnötig ist.

In einer weiteren bevorzugten Ausgestaltung ist vorgesehen, dass das zweite Computersystem an das erste Computersystem den Abschluss des Öffnungsvorganges meldet. Hierdurch ist sichergestellt, dass das Garagentor geöffnet ist und die Lieferung erfolgen kann.

In einer bevorzugten Variante wird das Garagentor nach dem Abliegen der Lieferung in Folge einer direkten Interaktion eines Zustellers mit dem Garagentorantrieb geschlossen. Hierzu kann insbesondere eine Steuertaste vorgesehen sein. Vorzugsweise wird die Schließung des Garagentors zeitverzögert - um beispielsweise 5s - ausgelöst, damit der Zusteller die Garage verlassen kann.

Beim Zusteller handelt es sich insbesondere um eine Person, welche den Transport der Lieferung unmittelbar bewirkt. Ebenso kann der Liefervorgang durch einen autonom gesteuerten Roboter durchgeführt werden. Der Zusteller kann überdies ein Lesegerät zur Erfassung der Sendungskennung der Lieferung bedienen. Im Falle eines Roboters kann das Erfassungsgerät unmittelbar integriert sein.

In einer weiteren bevorzugten Ausgestaltung wird das Garagentor in Folge eines Steuerbefehls des ersten Computersystems an das zweite Computersystem geschlossen. Der Steuerbefehl wird insbesondere ausgelöst, wenn der Zusteller - beispielsweise durch das Lesegerät - die Ablage der Lieferung in der Garage an das erste Computersystem gemeldet hat.

Alternativ oder zusätzlich kann vorgesehen sein, dass nach einer vorgegebenen Zeit - insbesondere 5 Minuten - das Garagentor wieder geschlossen wird. Hierdurch wird sichergestellt, dass die Garage am Schluss des Liefervorganges oder bei einem Fehlschlag der Zustellung wieder in einen sicheren, geschlossenen Zustand gelangt. Die selbstständige und unabhängige Schließung der Garage ist insbesondere auch dann von Vorteil, wenn die Kommunikation zwischen dem ersten Computersystem und dem zweiten Computersystem gestört ist. Die zeitabhängige Schließung des Garagentors kann insbesondere durch das zweite Computersystem oder die Steuerung des automatischen Garagentors ausgelöst werden.

Besonders bevorzugt überprüft das zweite Computersystem und/oder die Steuerung des automatischen Garagentors, ob das Schließen des Garagentors erfolgreich war. Probleme können dabei auftreten, wenn beim Schließen eine Sicherheitslichtschranke im Fahrweg des Garagentors ausgelöst wird oder der Antrieb des Garagentors aufgrund eines mechanischen Widerstands abschaltet. Beide Funktionen dienen der Vermeidung von Verletzungen bei der automatischen Torfahrt. Sollte das Schließen nicht erfolgreich sein, löst das zweite Computersystem bzw. die Steuerung des Garagentors nach einer Wartezeit - vorzugsweise mindestens 30 s - eine erneute Schließung des Garagentors aus. Schlägt eine gewisse Anzahl von Versuchen - vorzugsweise 5 - fehl, wird eine Fehlermeldung über das zweite Computersystem an das erste Computersystem übermittelt. Alternativ oder zusätzlich kann auch eine Benachrichtigung des Empfängers erfolgen.

Vorzugsweise ist vorgesehen, dass beim Öffnen des Garagentores eine auf den durch das Garagentor verschließbaren Eingangsbereich der Garage gerichtete Kamera aktiviert wird, um mehrere Bildaufnahmen anzufertigen. Die Bildaufnahmen dienen dabei den Dokumentationen des Öffnungsvorgangs, sowie der Kontrolle des Zustellers beim Ablegen der Lieferung in dem Garagenbereich. Die Bildaufnahmen können insbesondere genutzt werden um im Streitfall über die korrekte Zustellung der Lieferung, die Beschädigung oder das Abhandenkommen vom Garageninventar u. dgl. Beweise zu sichern. Weiterhin können die Bildaufnahmen auch der Information des - nicht am Bestimmungsort anwesenden - Empfängers dienen. Hierzu werden einzelne oder mehrere Bildaufnahmen per Nachricht (beispielsweise E-Mail) an den Empfänger gesendet und/oder ihm als Video-Livestream zur Verfügung gestellt.

Um den Empfängerdie Datenhoheitüberdie Bildaufnahmen zu geben, werden diese vorzugsweise in dem zweiten Computersystem gespeichert und nicht an das erste Computersystem übertragen.

Aus Gründen des Datenschutzes (Persönlichkeitsrecht) einer zustellenden Person kann überdies vorgesehen sein, dass die Bildaufnahmen nicht in lesbarer, sondern lediglich in verschlüsselter Form abgespeichert werden. Die zur Entschlüsselung benötigten Informationen (Schlüssel) werden dabei so auf die Computersysteme aufgeteilt, dass weder die in dem ersten Computersystem noch die in dem zweiten Computersystem vorhandenen Informationen zur Entschlüsselung ausreichend sind. Teile des Schlüssels oder der gesamte Schlüssel können auch an eine unabhängige dritte Stelle übermittelt werden. Bei berechtigtem Interesse lassen sich die Bilder dann entschlüsseln und entsprechend verwerten.

Vorzugsweise ist vorgesehen, dass die Aufzeichnung der Bildaufnahmen bis zum erneuten Schließen der Garage fortgesetzt wird. Somit sind in den aufgezeichneten Bilddaten Informationen über den gesamten Zeitabschnitt vorhanden, in dem das Garagentor geöffnet war. Hierdurch lässt sich eine lückenlose Dokumentation des gesamten Ablageprozesses durchführen.

Besonders bevorzugt umfasst das zweite Computersystem eine Gebäudesteuerung. Somit handelt es sich um eine sogenannte "SmartHome"-Anwendung. Diese kann dazu eingerichtet sein auch weitere Funktionen des Hauses wie beispielsweise Lichtsteuerung, Verschattung, Fensterantriebe, Heizungs- und Lüftungsanlagen zu überwachen und zu steuern.

In einer besonders bevorzugten Ausgestaltung ist das zweite Computersystem als über das Internet bereitgestellte IT-Infrastruktur (Cloud) ausgebildet. Hierbei sind die einzelnen zu steuernden Komponenten wie das automatische Garagentor mit einem eigenen Internet-Kommunikationsmodul ausgestattet. Dieses verbindet sich überdie Infrastrukturam Bestimmungsort (beispielsweise WLAN-Router) mit der Cloud und nimmt von dort Steuerbefehle entgegen. Dieses Konzept (Internet of Things) ermöglicht eine besonders einfache und leicht erweiterbare Kombination unterschiedlichster Komponenten, ohne dass hierfür spezialisierte Hardware (beispielsweise Kabel oder eigene Server) vorhanden sein muss. Cloud-Anwendungen haben überdies den Vorteil, dass dies sich besonders einfach auch von mobilen Endgeräten fernsteuern und überwachen lassen. So kann der Empfänger der Lieferung mittels eines mobilen Endgeräts, insbesondere eines Smartphones, ebenfalls mit der Cloud (des zweiten Computersystems) verbunden sein. Hierzu können einerseits Browser-Anwendungen oder spezialisierte Apps vorhanden sein. Hierdurch kann der Empfänger unmittelbar und verzögerungsfrei über den Zustellversuch sowie eine durch das erste Computersystem veranlasste Öffnung des Garagentores benachrichtigt werden. Beim unerwarteten Auftreten eines solchen Ereignisses ist eine sofortige Überprüfung und/oder Ergreifung von Gegenmaßnahmen möglich.

In einer besonders bevorzugten Ausgestaltung der Erfindung löst das zweite Computersystem die Öffnung des automatischen Garagentors erst nach Überprüfung einer Autorisierung aus. Bei Nicht-Vorliegen einer Autorisierung wird eine Fehlermeldung an das erste Computersystem zurückgegeben. Mittels der Autorisierung wird sichergestellt, dass ein öffnendes Garagentors nur dann stattfindet, wenn dies vom Empfänger auch gewünscht ist. Hierzu kann der Empfänger beispielsweise im Vorhinein definieren, welchen Logistikanbietern und/oder Absendern er generell eine Lieferung in die Garage zulassen und eine entsprechende Autorisierung gewähren möchte. Hierzu kann die Nachricht entsprechende ergänzende Angaben enthalten.

Vorzugsweise ist vorgesehen, dass in dem zweiten Computersystem eine Liste von autorisierten Sendungskennungen hinterlegt ist. Das zweite Computersystem gleicht nach Empfang der Nachricht von dem ersten Computersystem die darin enthaltene Sendungskennung mit der Liste ab. Ist die Sendungskennung in der Liste enthalten, wird die Öffnung des Garagentores ausgelöst. Die Liste kann flexibel von dem Empfänger gepflegt werden. Üblicherweise wird bei der Ankündigung einer Lieferung bzw. bei Bestellbestätigung die Sendungskennung des Logistikanbieters den Empfänger mitgeteilt. Sodann kann er - beispielsweise mittels einer entsprechenden App - die Sendungskennung in die Liste der zugelassenen Empfangssendungen eintragen.

Ebenso kann in dem zweiten Computersystem eine Liste von Sendungskennungen hinterlegt werden, für die eine Annahme in der Garage verweigert werden soll. Dies ist vor allem dann sinnvoll, wenn der Empfänger dem Logistikanbieter eine Generalvollmacht zur Ablage in der Garage erteilt hat. Dann kann er mittels der Negativ-Liste die Ablage einzelner - etwa besonders wertvoller - Lieferungen in der Garage unterbinden.

Weiterhin ist bevorzugt vorgesehen, dass in dem zweiten Computersystem eine Liste von bereits verwendeten Sendungskennungen gespeichert wird, in die eine Sendungskennung nach dem erfolgreichen Auslösen einer Öffnung des Garagentores eingetragen wird. Sollte anschließend eine zweite Nachricht von dem ersten Computersystem an das zweite Computersystem übermittelt werden, welche dieselbe Sendungskennung enthält, wird die Autorisierung zur Öffnung des Garagentores verweigert. Somit wird sichergestellt, dass die Öffnung auch nur dann möglich ist, wenn auch die Lieferung tatsächlich in die Garage hineingelegt wird.

Ebenso ist es möglich, dass der Empfänger oder eine von ihm bevollmächtigte Person ein mit dem zweiten Computersystem (beispielsweise überdas Internet) verbundenes Endgerät mit sich führt. Sollten bei der Prüfung der Autorisierung zur Eröffnung des Garagentores die im zweiten Computersystem vorhandenen Informationen nicht ausreichen, umdie Autorisierung zu bestimmen, sendetdas zweite Computersystem an das tragbare Endgerät eine Berechtigungsanfrage. Daraufhin kann der Empfänger oder die von ihm bevollmächtigte Person entscheiden, ob eine Öffnung des Garagentores autorisiert werden soll. Gegebenenfalls kann zur Unterstützung eine zusätzliche Kamera im Außenbereich vor der Garage vorgesehen sein, welche eine Bildaufnahme anfertigen und an das Endgerät schicken kann, um zu überprüfen, dass tatsächlich ein Zusteller mit einer Lieferung vor dem Garagentor wartet.

In einer besonders bevorzugten Ausgestaltung werden beim Erfassen der Sendungskennung Positionsdaten ermittelt und an das erste Computersystem übertragen. Die Positionsdaten werden anschließend mit dem Bestimmungsort zugeordneten Positionsdaten abgeglichen. Bevorzugt werden die ermittelten Positionsdaten von dem ersten Computersystem mit der Nachricht an das zweite Computersystem übermittelt. In dem zweiten Computersystem sind Positionsdaten hinterlegt, welche der Garage zugeordnet sind. Das zweite Computersystem vergleicht nach Erhalt der Nachricht die von dem ersten Computersystem übermittelten Positionsdaten mit dem der Garage zugeordneten Positionsdaten. Hieraus wird ein Abstand berechnet. Die Öffnung des Garagentors wird nur beim Unterschreiten einer Maximaldistanz, insbesondere 50 m, ausgelöst und andernfalls verweigert. Durch den Vergleich der Positionsdaten, welche von dem Zusteller - beispielsweise durch ein Lesegerät zur Erfassung der Sendungskennung - automatisch ermittelt werden und der im System hinterlegten Positionsdaten wird eine zusätzliche Missbrauchssicherung implementiert. Die automatische Öffnung der Garage kann nur ausgelöst werden, wenn die beiden Werte hinreichend übereinstimmen. Eine missbräuchliche oder versehentliche Öffnung wird, wenn beispielsweise die Sendung an einem anderen Ort eingescannt wird - vermieden.

Bei dem Lesegerät kann es sich um speziell dafür eingerichtete Hardware handeln. Ebenso kann die Funktion durch eine App auf einem Mobiltelefon bereitgestellt werden. Mobiltelefone sind vielfältig verfügbar und weisenüblicherweise ein Internet-Kommunikationsmodul (zur Verbindung mit dem ersten Computersystem), eine Kamera (zur Erfassung von optischen Sendungskennungen), vielfältige Funkmodule (Bluetooth, NFC; beispielsweise zur Erfassung von RFID-Tags) sowie Navigationsmodule (zur Positionserfassung) auf.

Vorzugsweise ist in dem ersten Computersystem zumindest eine Abmessung der Lieferung hinterlegt. Die zumindest eine Abmessung wird in der Nachricht von dem ersten Computersystem an das zweite Computersystem übertragen. Das zweite Computersystem steuert bei der anschließenden Öffnung des automatischen Garagentors den Antrieb so an, dass das Garagentor nicht vollständig, sondern um einen von der Abmessung abgeleiteten Betrag geöffnet wird, so dass die Lieferung auch bei teilgeöffnetem Garagentor in die Garage hineinbefördert werden kann. Die lediglich teilweise Öffnung des Garagentores hat mehrere Vorteile: Einerseits wird das Risiko eines unberechtigten Betretens und/oder des Entwendens von Gegenständen aus der Garage weitergesenkt. Besonders große Gegenstände können unter Umständen gar nicht aus der Garage entfernt werden. Weiterhin ergeben sich auch Vorteile für die Privatsphäre des Empfängers, da die Garage bei gering geöffnetem Tor weniger einsehbar ist. Weiterhin wird auch eine zustellende Person von einer etwaig angeordneten Kamera nicht vollständig erfasst. Schließlich ist bei einem lediglich teilweise geöffneten Garagentor auch der Austausch mit der Umwelt reduziert, so dass beispielsweise weniger Regen in das Innere der Garage gelangen kann oder im Winter weniger Wärme aus dem Garageninnenraum entweicht.

Bei der zumindest einen Abmessung der Lieferung handelt es sich vorzugsweise um das Minimum aus Breite, Tiefe und Höhe eines im Wesentlichen quaderförmigen Gegenstandes. Bei Lieferungen, die in aufrechter Position transportiert werden müssen, ist zweckmäßigerweise die Höhe angegeben.

Bei dem von der Abmessung abgeleiteten Betrag, um den das Garagentor geöffnet wird, wird zweckmäßigerweise ein prozentualer Aufschlag (insbesondere + 5 %) oder ein absoluter Aufschlag (beispielweise + 3 cm, + 5 cm oder + 10 cm) hinzuaddiert.

Gegenstand der Erfindung ist auch ein System zum Zustellen einer Lieferung an einen Bestimmungsort. Hiermit kann das vorbeschriebene erfindungsgemäße Verfahren durchgeführt werden. Das System umfasst ein erstes Computersystem zur Verwaltung einer Mehrzahl von Lieferungen, ein Lesegerät zum Erfassen einer Sendungskennung an einer Lieferung und zum Übermitteln der Sendungskennung an das erste Computersystem, einer an dem Bestimmungsort mittels eines automatischen Garagentores verschließbare Garage und ein zweites Computersystem zum Steuern des automatischen Garagentores. Dabei ist das System dazu eingerichtet die folgenden Schritte durchzuführen: Erfassen der Sendungskennung nach dem Erreichen des Bestimmungsortes, Übermittlung der Sendungskennung an das erste Computersystem, Übermittlung einer die Sendungskennung umfassenden Nachricht an das zweite Computersystem durch das erste Computersystem, anschließendes Auslösen einer Öffnung des Garagentores durch das zweite Computersystem, so dass die Lieferung durch das Garagentor transportiert und innerhalb der Garage abgelegt werden kann, wonach das Garagentor wieder geschlossen wird.

Ein weiterer Aspekt der Erfindung betrifft ein Computerprogramm zur Durchführung eines Verfahrens nach einem der Ansprüche 1 bis 15, welches, wenn es auf einem (zweiten) Computersystem ausgeführt wird, die folgenden Schritte durchgeführt: Empfangen einerersten Sendungskennung umfassenden Nachricht von einem ersten Computersystem, gegebenenfalls Abgleich von Autorisierungsparametern zur Überprüfung der Berechtigung, Auslösen einer Öffnung eines automatischen Garagentores, um das Ablegen einer Lieferung inner halb einer durch das automatische Garagentor verschlossenen Garage zu ermöglichen und auslösen und/oder Überwachen einer anschließenden Schließung des Garagentores.

Die Erfindung wird nachfolgend anhand einer, lediglich ein Ausführungsbeispiel darstellenden Zeichnung erläutert. Diese zeigt schematisch die wesentlichen Komponenten bei der Durchführung des erfindungsgemäßen Verfahrens.

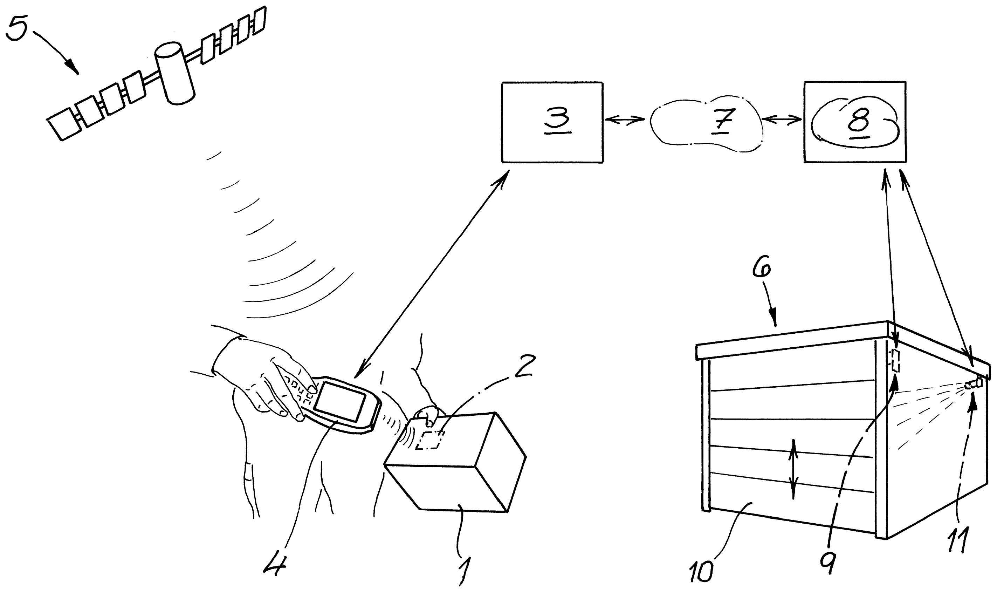

In der Figur ist dargestellt, dass eine Lieferung 1 in Gestalt eines Pakets an einem Bestimmungsort angelangt ist. Der Lieferung 1 ist eine eindeutige Sendungskennung zugeordnet, welche auf einem Aufkleber 2 in Form eines Strichcodes sowie als menschen lesbare Zeichen dargestellt ist. Ferner ist die Sendungskennung in einem ersten Computersystem 3 hinterlegt, welches von dem Logistikunternehmer, der die Lieferung 1 an den Bestimmungsort transportiert, zur Verwaltung einer Mehrzahl von Lieferungen verwendetwird. In dem ersten Computersystem 3 sind dazu zu jeder Lieferung die Sendungskennung sowie weitere Angaben wie beispielsweise die Absendeadresse, die Zieladresse (Bestimmungsort), Empfänger etc. hinterlegt.

An dem Bestimmungsort erfasst der Zusteller mittels eines Lesegerätes 4 die auf dem Aufkleber 2 vermerkte Sendungskennung der Lieferung 1. Im gezeigten bevorzugten Ausführungsbeispiel wird gleichzeitig mittels einer Satellitenkonstellation 5 die Position des Lesegeräts 4 bzw. der Lieferung 1 bestimmt. Die dabei ermittelten Positionsdaten sowie die Sendungskennung werden an das erste Computersystem 3 übertragen.

In dem ersten System 3 ist außerdem die Information hinterlegt, dass da dem Bestimmungsort die Ablage in einer Garage 6 möglich ist. Hierzu überträgt das erste Computersystem 3 über das Internet 7 eine Nachricht an ein zweites Computersystem 8, welche die Sendungskennung sowie die von dem Lesegerät 4 ermittelten Positionsdaten enthält.

Das zweite Computersystem 8 überprüft aufgrund der von dem ersten Computersystem 3 übermittelten Nachricht, ob eine Autorisierung zum Öffnen der Garage 6 vorliegt. Hierzu wird auch überprüft, ob die Positionsdaten, welche von dem Lesegerät 4 erfasst wurden, hinreichend genau mit den in dem zweiten Computersystem 8 für die Garage 6 hinterlegten Positionsdaten übereinstimmen. Ferner wird überprüft, ob die Sendungskennung bereits für einen Öffnungsvorgang in der Vergangenheit verwendet wurde. Sobald die Berechtigungsüberprüfung positiv abgeschlossen wurde wird durch das zweite Computersystem 8, welches bevorzugt als Cloud ausgebildet ist, ein Steuerbefehl an den Antrieb 9 eines die Garage 6 verschließenden Garagentores 10 übermittelt. Infolgedessen wird das Garagentor 10 geöffnet, so dass die Lieferung 1 innerhalb der Garage 6 abgelegt werden kann.

Nachdem der Zusteller mittels des Lesegerätes 4 die Ablage der Lieferung 1 an das erste Computersystem 3 gemeldet hat, übermittelt das erste Computersystem 3 an das zweite Computersystem 8 eine zweite Nachricht, woraufhin das zweite Computersystem 8 mittels der Steuerung 9 ein Schließen des Garagentors 10 auslöst. Der Empfang der Lieferung 1 innerhalb der Garage 6 ist damit abgeschlossen.

Zur Überwachung der Zustellung ist ferner innerhalb der Garage 6 eine Kamera 11 angeordnet, welche auf den durch das Tor 10 verschließbarem Eingangsbereich der Garage 6 gerichtet ist. Beim Öffnen der Garage 6 wird eine Bildaufnahme der Kamera 11 ausgelöst. Hierbei werden mehrere Bilder als Zeitreihe oder Video aufgezeichnet und innerhalb des zweiten Computersystems 8 abgespeichert.

## Patentansprüche

1. Verfahren zum Zustellen einer Lieferung (1) an einem Bestimmungsort, wobei der Lieferung (1) eine eindeutige Sendungskennung zugeordnet wird, die an der Lieferung (1)angebrachtist und die in einem ersten Computersystem (3) zur Verwaltung von einer Mehrzahl von Lieferungen gespeichert wird, wobei an dem Bestimmungsort eine mittels eine automatischen Garagentores (9, 10) verschließbare Garage (6) vorhanden ist, welches durch ein zweites Computersystem (8) gesteuert werden kann, wobei die Sendungskennung an der Lieferung (1) nach Erreichen des Bestimmungsortes erfasst und an das erste Computersystem (3) übermittelt wird, wobei das erste Computersystem (3) anschließend eine die Sendungskennung umfassende Nachricht an das zweite Computersystem (8) übermittelt, woraufhin das zweite Computersystem (8) die Öffnung des Garagentores (10) auslöst, wonach die Lieferung (1) durch das Garagentor (10) transportiert und innerhalb der Garage (6) abgelegt wird, wonach das Garagentor (10) wieder geschlossen wird.

2. Verfahren nach Anspruch 1, **dadurch gekennzeichnet, dass** das zweite Computersystem (8) an das erste Computersystem (3) die Übergabe des Öffnungsbefehls an das automatische Garagentor (9, 10) bestätigt.

3. Verfahren nach Anspruch 1 oder 2, **dadurch gekennzeichnet, dass** das zweite Computersystem (8) an das erste Computersystem (3) den Abschluss des Öffnungsvorgangs meldet.

4. Verfahren nach einem der Ansprüche 1 bis 3, **dadurch gekennzeichnet, dass** das Garagentor (10) nach dem Ablegen der Lieferung (1) in Folge einer direkten Interaktion des die Lieferung (1) überbringenden Zustellers mit dem Garagentorantrieb (9) geschlossen wird.

5. Verfahren nach einem der Ansprüche 1 bis 3, **dadurch gekennzeichnet, dass** das Garagentor (10) in Folge einer zweiten Nachricht des ersten Computersystems (3) an das zweite Computersystem (8) geschlossen wird.

6. Verfahren nach einem der Ansprüche 1 bis 5, **dadurch gekennzeichnet, dass** das zweite Computersystem (8) nach einer vorgegebenen Zeit, insbesondere 5 Minuten, das Garagentor (10) schließt.

7. Verfahren nach einem der Ansprüche 1 bis 6, **dadurch gekennzeichnet, dass** beim Öffnen einer auf dem durch das Garagentor (10) verschließbaren Eingangsbereich der Garage (6) gerichtete Kamera (11) aktiviert wird, um mehrere Bildaufnahmen aufzuzeichnen.

8. Verfahren nach Anspruch 7, **dadurch gekennzeichnet, dass** die Aufzeichnung der Bildaufnahmen bis zum erneuten Schließen der Garage (6) fortgesetzt wird.

9. Verfahren nach einem der Ansprüche 1 bis 8, **dadurch gekennzeichnet, dass** das zweite Computersystem (8) eine Gebäudesteuerung umfasst.

10. Verfahren nach Anspruch 9, **dadurch gekennzeichnet, dass** das zweite Computersystem (8) zumindest teilweise als über das Internet bereitgestellte Infrastruktur (Cloud) ausgebildet ist.

11. Verfahren nach einem der Ansprüche 1 bis 10, **dadurch gekennzeichnet, dass** das zweite Computersystem (8) die Öffnung des Garagentores (10) erst nach Überprüfen einer Autorisierung auslöst und bei Nicht-Vorliegen eine Autorisierung eine Fehlermeldung an das erste Computersystem (3) zurückgibt.

12. Verfahren nach Anspruch 11, **dadurch gekennzeichnet, dass** in dem zweiten Computersystem (8) eine Liste von autorisierten Sendungskennungen hinterlegt ist und dass das zweite Computersystem (8) nach Empfang der Nachricht von dem ersten Computersystem (3) die darin enthaltene Sendungskennung mit der Liste abgleicht und bei Vorhandensein die Öffnung des Garagentores (10) auslöst.

13. Verfahren nach Anspruch 11 oder 12, **dadurch gekennzeichnet, dass** in dem zweiten Computersystem (8) eine Liste von bereits verwendeten Sendungskennungen gespeichert ist, in die eine Sendungskennung nach dem erfolgreichen Auslösen einer Öffnung des Garagentores (10) eingetragen wird, und dass das zweite Computersystem (8) einen zweiten Öffnungsvorgang für dieselbe Sendungskennung verweigert.

14. Verfahren der Ansprüche 1 bis 13, **dadurch gekennzeichnet, dass** beim Erfassen der Sendungskennung Positionsdaten ermittelt und an das erste Computersystem (3) übermittelt werden, dass die Positionsdaten mit der Nachricht von dem ersten Computersystem (3) an das zweite Computersystem (8) übermittelt werden, dass in dem zweiten Computersystem (8) der Garage (6) zugeordnete Positionsdaten hinterlegt sind, dass das zweite Computersystem (8) nach Erhalt der Nachricht von dem ersten Computersystem (3) die übermittelten Positionsdaten mit den der Garage (6) zugeordneten Positionsdaten vergleichtund einen Abstand berechnet und dass die Öffnung nur bei Unterschreiten einer Maximaldistanz, insbesondere 50 m, ausgelöst und andernfalls verweigert wird.

15. Verfahren nach einem der Ansprüche 1 bis 14, **dadurch gekennzeichnet, dass** in dem erstem Computersystem (3) zumindest eine Abmessung der Lieferung (1)hinterlegtist, das zumindest eine Abmessung in der Nachricht von dem ersten Computersystem (3) an das zweite Computersystem (8) mit übertragen wird und dass das zweites Computersystem (8) bei der Öffnung das automatische Garagentor (9, 10) so ansteuert, dass das Garagentor (10) nicht vollständig, sondern um einen von der Abmessung abgeleiteten Betrag geöffnet wird, so dass die Lieferung (1) auch bei teilgeöffneten Garagentor (10) in die Garage (6) hineinbefördert werden kann.

16. System zum Zustellen einer Lieferung an einem Bestimmungsort umfassend ein erstes Computersystem (3) zur Verwaltung einer Mehrzahl von Lieferungen,
ein Lesegerät (4) zum Erfassen einer Sendungskennung an einer Lieferung (1) und zum Übermitteln der Sendungskennung an das erste Computersystem (3),
eine an dem Bestimmungsort mittels eines automatischen Garagentores (9, 10) verschließbare Garage (6),
ein zweites Computersystem (8) zum Steuern des automatischen Garagentores (9, 10) wobei das System dazu eingerichtet ist, die folgenden Schritte durchzuführen:
• Erfassen der Lieferung (1) nach Erreichen des Bestimmungsortes,
• Übermittlung der Sendungskennung an das erste Computersystem (3),
• Übermittlung einer die Sendungskennung umfassenden Nachricht an das zweite Computersystem (8) durch das erste Computersystem (3),
• anschließendes Auslösen einer Öffnung des Garagentores (10) durch das zweite Computersystem (8), so dass die Lieferung (1) durch das Garagentor (10) transportiert und innerhalb der Garage (6) abgelegt werden kann,
• wonach das Garagentor (10) wieder geschlossen wird.
